# EUROPEAN PATENT SPECIFICATION

(11) **EP 3 658 886 B1**
(45) Date of publication and mention of the grant of the patent: **15.06.2022**
(21) Application number: 18755558.6
(22) Date of filing: 25.07.2018
(51) Int. Cl.: G01N 1/30, G03F 7/20

(54) **CONTRAST SOLUTION**
KONTRASTLÖSUNG
SOLUTION DE CONTRASTE

(30) Priority: 27.07.2017 IT 201700086257
(43) Date of publication of application: 03.06.2020
(73) Proprietor: Fondazione Istituto Italiano di Tecnologia, 16163 Genova (IT); Scuola Normale Superiore, 56126 Pisa (IT)
(72) Inventor: CAPPELLO, Valentina, 61032 Fano (Pesaro-Urbino) (IT); SIGNORE, Giovanni, 56124 Pisa (IT); DI PIETRO, Sebastiano, 56124 Pisa (IT); PARLANTI, Paola, 56020 Santa Maria A Monte (Pisa) (IT); SANTI, Melissa, 58024 Massa Marittima (Grosseto) (IT); GEMMI, Mauro, 56126 Pisa (IT)
(74) Representative: Biggi, Cristina
(86) International application number: PCT/IB2018/055541
(87) International publication number: WO 2019/021201

(56) References cited:
- WO-A1-2017/017428
- WO-A2-2007/089641
- Kristen D Phend ET AL: "An Osmium-free Method of Epon Embedment That Preserves both Ultrastructure and Antigenicity for Post-embedding Immunocytochemistry", The Journal of Histochemistry and Cytochemistry, 11 October 1996 (1996-10-11), pages 283-292, XP055309333, DOI: 10.1177/43.3.7532656 Retrieved from the Internet: URL:http://jhc.sagepub.com/content/43/3/28 3.full.pdf [retrieved on 2016-10-11]
- KÜN-DARBOIS JEAN-DANIEL ET AL: "Contrast enhancement with uranyl acetate allows quantitative analysis of the articular cartilage by microCT: Application to mandibular condyles in the BTX rat model of disuse", MICRON, PERGAMON, OXFORD, GB, vol. 97, 21 March 2017 (2017-03-21), pages 35-40, XP029986805, ISSN: 0968-4328, DOI: 10.1016/J.MICRON.2017.03.008

## Description

### TECHNICAL FIELD

The present invention fits into the field of substances employed in the preparation of biological samples that must be characterised by transmission electron microscopy; more precisely, the invention relates to substances for negative and positive staining of biological samples to be analysed by transmission electron microscopy.

### PRIOR ART

In the prior art the reference stain (or staining agent) conventionally used as an agent for staining biological samples is uranyl acetate. However, the radioactive nature of uranyl acetate and the derivates thereof causes severe restrictions from a safety viewpoint. Furthermore, the delivery and disposal of uranyl acetate derivatives is extremely costly, due to the increasingly strict regulations in this regard. Starting from the beginning of the 1970s, both positive and negative biological sample staining procedures have been devised and developed, both with substances other than uranyl acetate and the analogues thereof (for example uranyl formate). The alternative procedures to uranyl acetate most widely used at present are set forth in the publication Basic techniques for transmission electron microscopy (M.A. Hayat, Academic Press, 1986) and are mainly based on the use of transition metals.

Possible contrast media substituting for uranyl acetate which exhibit similar properties to that compound have recently been under study. For example, in the study *New versatile staining reagents for biological transmission electron microscopy that substitute for uranyl acetate.* Nakatoshi et al. Journal of Electron Microscopy 60(6): 401-407 (2011*),* the authors tested samarium and gadolinium in the form of acetate salts for staining both animal and plant samples, since the dimensions of these two elements in terms of atomic radius are similar to those of uranium. In the discussion of the results, it is reported that the tested compounds could be excellent substitutes for uranyl acetate in staining thin sections (*post-sectioning staining*)*,* but as regards staining efficiency, they provided only fairly good results. The tested compounds further demonstrated to lack the fixative properties of uranyl acetate. In order to improve the staining capacity of the tested compounds, the authors suggest the inclusion of supplementary substances that could have a positive influence. However, in the prior art it is difficult to identify substances which, when added to lanthanide salts, are capable of forming chemically stable solutions with a low chemical risk and which enable better images to be obtained, or at least ones comparable to those obtainable with uranyl acetate. In this regard, phosphotungstic acid (abbreviated with the initials PTA) has very often been employed with good results in optical microscopy as a stain in combination with other substances, as set forth, for example, in patent application GB2372811. In this document, PTA is used in an alcoholic solution combined with eosin or synthetic azide stains, but in no case with lanthanides or salts thereof. Considering, on the other hand, the use of PTA in staining techniques in transmission electron microscopy, in the scientific publication *Examination of electron stains as a substitute for uranyl acetate for the ultrathin sections of bacterial cells.* Tgamuchu et al. Journal of Electron Microscopy 59(2): 113-118 (2010*),* a comparative study between PTA and other staining agents alternative to uranyl acetate is reported. From this study it emerges that none of the tested compounds (namely, besides PTA, platinum blue, oolong tea extract and potassium permanganate) provide staining results comparable to those of uranyl acetate. In particular, PTA provided low quality images in tests with both Gram-positive and Gram-negative bacteria.

Today, therefore, although alternative stains to uranyl acetate are commercially available (such as "Uranyless", "336 uranyl acetate alternative", "NanoW" and "platinum blue"), there is still a great need in this sector to identify contrast media not derived from depleted uranium which show a greater staining efficiency than the uranyl acetate used until now. The present invention solves the problem by providing a solution based on lanthanide salts and heteropolyacids and a use thereof as a staining solution.

The Applicant has in fact found that by combining lanthanide salts with heteropolyacids, generally used in optical microscopy but at the same time considered to perform poorly in electron microscopy, it is possible to obtain a staining efficiency that is not only comparable to the standard of uranyl acetate, but even better.

### SUMMARY OF THE INVENTION

The present invention relates to a solution comprising: a heteropolyacid and a lanthanide salt in a hydroalcoholic solvent. The solution may optionally also comprise an organic or inorganic buffer with a pH comprised in the interval of 4-6, or a strong acid or base. The object of the present invention also relates to a use of said solution and any products of the reaction between the components thereof as a negative stain for biological samples, a kit containing the components of said solution and a method for preparing biological samples for analysis by transmission electron microscopy which uses said solution in at least one step.

### DESCRIPTION OF THE FIGURES

Figure 1 shows the ³¹P-NMR spectrum of an equimolar solution of PTA and YbCl₃ in 20% v/v ethanol/water, prepared and characterised according to example 1.
Figure 2 shows comparative images, acquired by TEM, of embedded MIA PaCa-2 cells positively stained with PTA/YbCl₃ at different concentrations. Shown on the left is the image obtained with solution c) and on the right the one with solution d) according to examples 3 and 4.

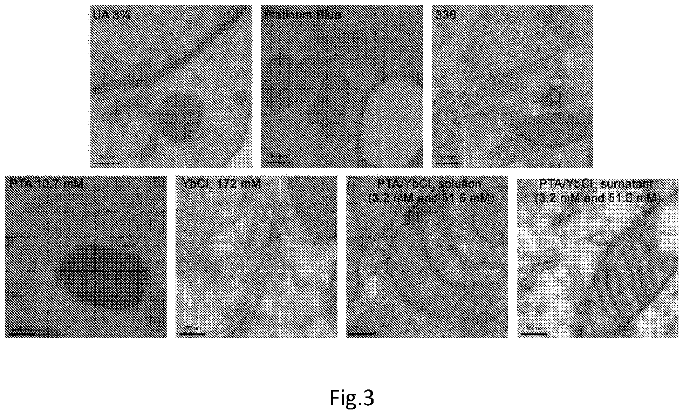

Figure 3 shows comparative images, acquired by TEM, of embedded MIA PaCa-2 cells positively stained with different staining solutions. The images shown correspond, respectively from top to bottom and from left to right, to solutions j), h), g), a), b), c) and c), respectively, from which the precipitate has been removed by centrifugation according to examples 3 and 4. In all of the images, the signal-to-noise ratio was evaluated both in the entire image and through an intracellular membrane (graph width 30 px).
Figure 4 shows comparative images of a qualitative type, acquired by TEM, of suspensions of liposomes negatively stained with uranyl acetate and with the staining solution of the present invention at different concentrations. The images shown correspond, from left to right, respectively to solutions j), c) and d) according to example 2.

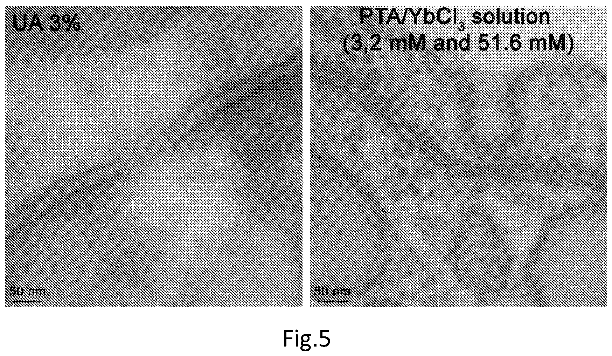

Figure 5 shows comparative images of MIA PaCa-2 cells positively stained with uranyl acetate and with the staining solution of the present invention in a preferred embodiment according to example 3.

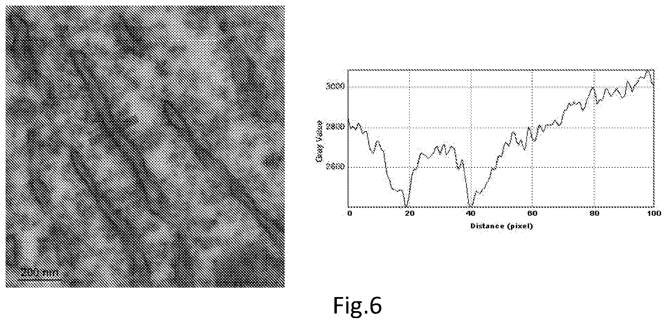

Figure 6 shows a graph of staining values on the right, associated with an image, on the left, of a biological membrane stained with solution c according to example 4, used to make quantitative comparisons.

### DETAILED DESCRIPTION

In a first aspect, the present invention relates to a solution comprising:
a) a heteropolyacid with the general formula H₃PM₁₂O₄₀, wherein M is tungsten or molybdenum;
b) a lanthanide salt with the general formula Ln(III)Aₓ*nH₂O, wherein Ln is an element selected from the group ytterbium, terbium, europium and gadolinium and A is a halide anion, x is a whole number greater than or equal to 1, and n is a whole number greater than or equal to 0;
c) an aqueous or hydroalcoholic solvent containing up to 70% (v/v) alcohol;

The complex acid as per point a) is preferably phosphotungstic acid, with the formula H₃PW₁₂O₄₀, or phosphomolybdic acid, with the formula H₃PMo₁₂O₄₀, both commercially available, or known precursors thereof, such as: sodium tungstate with the formula Na₂WO₄ or sodium molybdate with the formula Na₂MoO₄, both to be mixed with orthophosphoric acid and hydrochloric acid.

The solution of the present invention is defined in claim 1. The lanthanide salt can be either in anhydrous form, if n is equal to 0, or in hydrate form. In the latter case, said salt preferably contains a number n of molecules of water of crystallisation equal to 6.

The molar ratio between component a) and component b) of the present solution is preferably comprised in the interval of 0.1-100, even more preferably 1-50, more preferably 1-15.

The concentration of component b) is preferably comprised between 2 and 200 mM, preferably between 20 and 140 mM, even more preferably between 40 and 80 mM. Outside these intervals, in fact, one observes an increase in the non-specific staining of the samples, which leads to a reduction in the signal-to-noise ratio.

The alcohol present in the hydroalcoholic solvent mixture as per point c) is preferably selected between methanol and ethanol.

Optionally, in some embodiments of the invention, in addition to the intrinsic buffering power of component a), a buffer solution or a strong acid or base can be used to reach the interval of pH 4-6. In the case of a buffer solution, it is selected from those known to the person skilled in the art and can be, for example, a cacodylate, acetate or formate buffer.

In a particularly preferred embodiment, the solution according to the present invention comprises:
a) phosphotungstic acid, with the formula H₃PW₁₂O₄₀;
b) ytterbium chloride hexahydrate, with the formula YbCl₃*6H₂O;
c) a hydroalcoholic solvent containing 20% (v/v) alcohol.

The solution described thus far, comprising components a) to c), has application as a solution for negative or positive staining of biological samples for analysis by electron microscopy.

In a second aspect, the present invention relates to the use of a compound obtainable under standard ambient pressure and temperature conditions and with a pH comprised in the interval of 4-6 through a reaction between components a) and b) described above as negative or positive staining of biological samples for analysis by electron microscopy. Compound obtainable through a reaction between components a) and b) means a chemical species containing atoms of oxygen, phosphorous, Ln originating from component a) and M originating from component b), which is thermodynamically stable in a solution under the aforesaid conditions. According to a preferred embodiment, said compound is obtained through a reaction between equimolar amounts of phosphotungstic acid as component a) and ytterbium chloride as component b) and has the formula [YbPW₉O₃₄]⁶⁻. Said species is defined as a lanthanide polyoxometalate.

In a third aspect, the present invention relates to a kit comprising separate pre-dosed containers in which components a) to c) as described above or the precursors thereof are preserved.

In a fourth aspect, the present invention relates to a method for preparing biological samples for analysis by electron microscopy comprising the following steps:
i) treating the biological sample to be analysed with a buffered fixing solution with a pH between 2 and 8;
ii) treating the sample as per point i) with a buffered post-fixing solution with a pH as in point i);
iii) treating the biological sample as per point ii) with the solution comprising components a) to c) as defined above;

In step i) a solution selected, for example, between glutaraldehyde in a concentration comprised between 1.5 and 4% and mixtures of glutaraldehyde and paraformaldehyde can be used as a fixing solution. The buffer to be used in this step is any organic or inorganic buffer capable of maintaining the pH of the solution in the interval of 2-8; physiological pH values comprised between 7 and 7.4 are particularly preferred in this step.

In step ii) a solution, for example, of OsO₄ in a concentration comprised between 0.5 and 4%, optionally in combination with a corresponding reducing agent, such as K₃Fe(CN)₆, can be used as a post-fixing solution. The buffer to be used in this step is preferably the same as in point i).

The solution as per point iii) proves particularly effective when it has a concentration of component b) comprised between 2 and 200 mM, preferably between 20 and 140 mM, even more preferably between 40 and 80 mM. Outside these intervals, in fact, one observes an increase in the non-specific staining of the samples, which leads to a reduction in the signal-to-noise ratio.

### EXAMPLES

### Example 1: preparation and characterisation of the PTA-YbCl₃ solution

A solution of phosphotungstic acid (concentration 10.7 mM) in 20% v/v ethanol/water was prepared. The pH of this solution was brought to around 5 with 1M sodium hydroxide. An equal volume of a solution of 172 mM ytterbium chloride hexahydrate in 20% v/v ethanol/water was added to this solution. The pH was again adjusted to 5 with 1M sodium hydroxide. The mixture was kept under stirring at room temperature for no less than 1h. The solution thus obtained was called "X solution 1.5" and had a precipitate. For the purposes of the subsequent experiments, a distinction was thus made between the solution thus obtained and the solution in which the precipitate was removed by centrifugation.

The conditions of stability of the chemical species in the solution thus obtained with variations in the molar ratio between components were subsequently investigated via IPC-MS and ³¹P-NMR analysis. It was found that, quantitatively, with an equimolar ratio between components a) and b) a single species is obtained, identified as ytterbium polyoxometalate [YbPW₉O₃₄]⁶⁻, whereas when more than one equivalent of YbCl₃*6H₂O is added, the formation of a precipitate identified as Yb(HWO₄)₃ is observed. On the other hand, in the case of molar ratios of less than 1, the formation of another species containing phosphorous and ytterbium, yet to be identified, was observed.

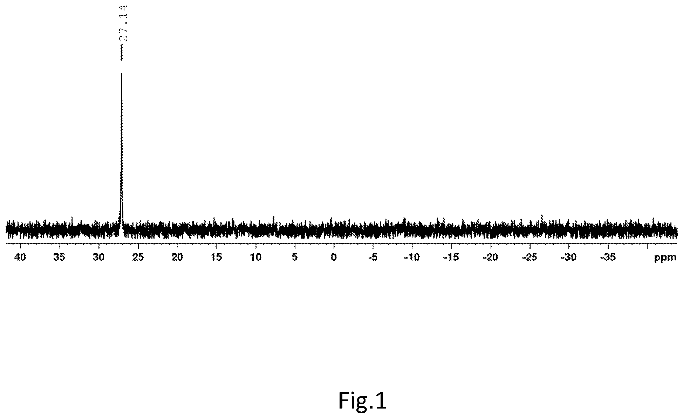

The characterisation of the compound [YbPW₉O₃₄]⁶⁻ was proven by ³¹P-NMR analysis, in which a single peak having a chemical shift of δ=27 ppm in 20 % v/v ethanol/water with the addition of deuterated water (at least 5% by volume) was observed (see Figure 1). It is noted that in the same solvent and with a pH = 5-6 the phosphorous of the phosphotungstic acid per se resonates at 10.8 ppm. The peak of ytterbium polyoxometalate obtained (already starting from equimolar amounts) has a line width of around 13 Hz; this widening compared to the 3 Hz of the starting phosphotungstic acid confirms the presence of the paramagnetic ion Yb³⁺ in proximity to the phosphorous atom within the structure, in accordance with the prior art on phosphotungstates of lanthanides. Furthermore, smaller shifts in the NMR frequency of the peak of ytterbium phosphotungstate (0.1-0.5 ppm) were observed in the case of mixed counterions: from pure sodium (27.17) to pure ytterbium (27.22).

### Example 2: preparation of biological samples in a suspension for TEM analysis (negative staining).

The solution containing a suspension of liposomes was made to adsorb on a medium for electron microscopy and subsequently stained with "X solution 1.5" for times comprised between 30 seconds and 2 minutes in order to obtain a non-specific deposition of the contrast medium around the particle of the suspension. After the samples had been drained and allowed to dry, they were directly analysed with a transmission electron microscope (Zeiss Lybra 120 plus) equipped with an omega filter in the column for energy filtering.

### Example 3: preparation of embedded biological samples for TEM analysis (positive staining).

MIA PaCa-2 culture cells were fixed with a 1.5% solution of glutaraldehyde in the presence of a sodium cacodylate buffer (0.1M, pH 7.4) and post-fixed with 1% OsO₄ plus K₃Fe(CN)₆ in a sodium cacodylate buffer. After washing, the samples were stained *"en bloc"with* the solution described in example 1 and called "X solution 1.5" for one hour (room temperature, darkness) whilst the control samples were stained with a solution of 3% uranyl acetate in 20% ethanol or with alternative commercial solutions (for example "platinum blue" or "Uranyl acetate alternative 336" stain by Agar Scientific). The samples were subsequently embedded in epoxy resin (EPON 812) and left to polymerise for 48 h at 60°C. After polymerisation, the samples were cut with a UC7 ultramicrotome (Leica) and analysed with a transmission electron microscope (Zeiss Lybra 120 plus) equipped with an omega filter in the column for energy filtering.

### Example 4: comparative results

The effectiveness of the solution of the example with variations in the molar ratio between components a) and b) was assessed and compared to various other commercially available staining solutions.

The staining of the images of samples treated with the various solutions was assessed both qualitatively and quantitatively as the signal-to-noise (S/N) ratio through the cell membranes (between the membranes and the intracellular space).

Firstly, samples treated as described in example 2 and samples treated with the same procedure, replacing the solution of example 1 with uranyl acetate and with the commercial solution "uranyl acetate alternative 336", were analysed.

The results obtained from measurements performed on ten different cells per sample are shown in table 1 below:

| *Staining solution used* | *mean S*/*N* | *Standard dev.* |
|---|---|---|
| *Uranyl acetate* | 1.221 | 0.061 |
| *336* | 1.297 | 0.054 |
| "X *Solution 1.5"* | 1.349 | 0.095 |

The results reported above show not only that the solution of the present invention enables better staining to be obtained compared to other commercial solutions, but also shows a better contrast and resolution compared to uranyl acetate.

Subsequently, the contrast and staining efficiency were assessed and compared for different molar ratios of PTA/YbCl₃. The results obtained from measurements performed on ten different cells per sample are shown in table 2 below:

| *Yb*/*P molar ratio* | *Mean S*/*N* | *Standard dev.* |
|---|---|---|
| *1 eq* | 1.193 | 0.039 |
| *2.5 eq* | 1.360 | 0.074 |
| *5 eq* | 1.233 | 0.047 |
| *7.5 eq* | 1.340 | 0.106 |
| *10 eq* | 1.366 | 0.086 |
| *12.5 eq* | 1.365 | 0.075 |
| *50 eq* | 1.209 | 0.028 |
| "X *Solution 1.5" supernatant (16 eq)* | 1.451 | 0.077 |

The optimal working pH for "X *Solution 1.5"* was moreover assessed. The results obtained from measurements performed on ten different cells per sample are shown in table 3 below:

| *pH* | *Mean S*/*N* | *Standard dev.* |
|---|---|---|
| *1-2* | 1.269 | 0.038 |
| 4.5-5 | 1.451 | 0.077 |

Finally, comparative tests conducted on the solution of the present invention and its individual components showed the presence of a synergistic effect tied to the solution compared to the use of PTA and YbCl₃ individually. The results obtained from measurements performed on ten different cells per sample are shown in table 4 below:

| | *Mean S*/*N* | *Standard dev.* |
|---|---|---|
| *PTA 10.7 mM* | 1.137 | 0.023 |
| *YbCl₃ 172 mM* | 1.181 | 0.030 |
| *"X Solution 1.5"* | 1.214 | 0.019 |

Below is a list of the compositions of the solutions that showed representative results and of which the TEM images obtained are shown in the figures.
a) 10.7 mM PTA solution
b) 172 mM YbCl₃ solution
c) PTA/YbCl₃ solution (3.2 mM and 51.6 mM, respectively, Yb/PTA molar ratio: 16.1)
d) PTA/YbCl₃ solution (5.35 mM and 86 mM, respectively, Yb/PTA molar ratio: 16.1)
e) PTA/YbCl₃ solution (1.05 mM and 51.6 mM, respectively, Yb/PTA molar ratio: 49.1)
f) PTA/YbCl₃ solution (3.2 mM and 1.4 mM, respectively, Yb/PTA molar ratio: 5.4)
g) commercial "uranyl acetate alternative 336" staining solution
h) commercial "Platinum blue" staining solution
i) commercial "NanoW" staining solution
j) benchmark uranyl acetate solution (3% w/w)

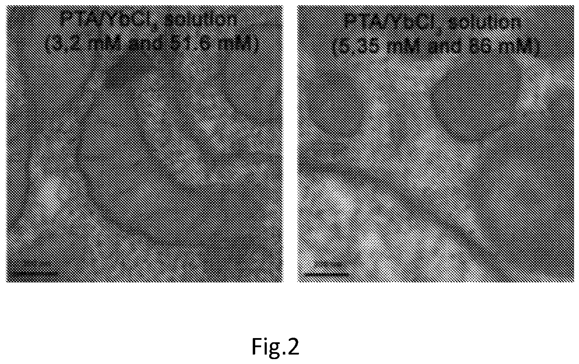

From the images obtained, it may be observed that solution d) induces an extensive precipitation of the reagent, thus reducing the signal-to-noise ratio (shown in figure 2), whereas solution c) brings about excellent results in both staining procedures, whether it be negative staining in a suspension or positive staining in embedded samples. Solutions a) and b), irrespective of concentration, result in poor staining.

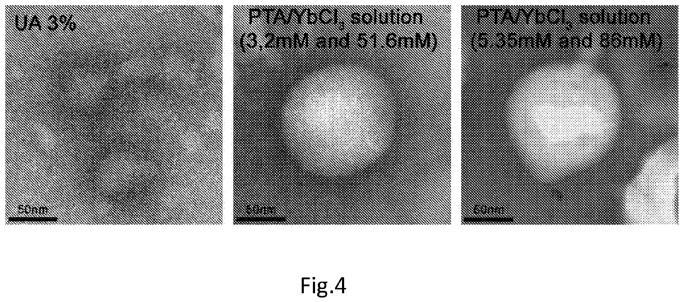

The solution was further tested and compared with commercial solutions in negative staining of liposomes. In this case as well, the images obtained, shown in Figure 4, show the improvement in staining obtained using the solution of example 1.

## Claims

1. A solution comprising:
a) a heteropolyacid with the general formula H₃PM₁₂O₄₀, wherein M is tungsten or molybdenum,
b) a lanthanide salt with the general formula Ln(III)Aₓ*nH₂O, wherein Ln is an element selected from ytterbium, europium, terbium and gadolinium, A is a halide anion, x is a whole number greater than or equal to 1, and n is a whole number greater than or equal to 0;
c) an aqueous or hydroalcoholic solvent containing up to 70% (v/v) alcohol;

2. The solution according to claim 1, wherein the molar ratio between component a) and component b) is comprised in the interval of 0.1-100, even more preferably 1-50, more preferably 1-15.

3. The solution according to claim 1 or 2, wherein the hydroalcoholic solvent as per point c) has 20% v/v ethanol.

4. A use of a compound obtained through a reaction between components a) and b) according to any one of claims 1 to 3 as a contrast medium for biological samples in suspension for negative staining or embedded in resin for positive staining.

5. A use according to claim 4, wherein said compound has the formula [YbPW₉O₃₄]⁶⁻.

6. A kit comprising separate pre-dosed containers comprising components a) to c) as defined in claims 1-3.

7. A method for preparing biological samples for analysis by electron microscopy, comprising the following steps:
(i) treating the biological sample to be analysed with a buffered fixing solution with a pH between 2 and 8;
(ii) treating the sample as per point i) with a buffered post-fixing solution with a pH as in point i);
(iii) treating the biological sample as per point ii) with the solution comprising the components a) to c) as defined in claims 1-3.

8. A kit according to claim 6 or a method according to claim 7, wherein the concentration of said component b) in the solution is comprised between 2 and 200 mM, preferably between 20 and 140 mM, even more preferably between 40 and 80 mM.

9. A use of a solution according to any one of claims 1 to 3 as a negative staining solution for biological samples.

10. A use of a solution according to any one of claims 1 to 3 as a positive staining solution for biological samples.

## Patentansprüche

1. Lösung, umfassend:
a) eine Heteropolysäure mit der allgemeinen Formel H₃PM₁₂O₄₀, wobei M Wolfram oder Molybdän ist,
b) ein Lanthanidsalz mit der allgemeinen Formel Ln(III)Aₓ*nH₂O, wobei Ln ein Element ist, das aus Ytterbium, Europium, Terbium und Gadolinium ausgewählt ist, A ein Halogenidanion ist, x eine ganze Zahl größer oder gleich 1 ist und n eine ganze Zahl größer oder gleich 0 ist;
c) ein wässriges oder hydroalkoholisches Lösungsmittel, das bis zu 70 % (v/v) Alkohol enthält;

2. Lösung nach Anspruch 1, wobei das Molverhältnis zwischen Komponente a) und Komponente b) im Bereich von 0,1 bis 100, noch bevorzugter 1 bis 50, noch bevorzugter 1 bis 15 liegt.

3. Lösung nach Anspruch 1 oder 2, wobei das hydroalkoholische Lösungsmittel gemäß Punkt c) 20 % v/v Ethanol aufweist.

4. Verwendung einer durch eine Reaktion zwischen den Komponenten a) und b) erhaltenen Verbindung nach einem der Ansprüche 1 bis 3 als Kontrastmedium für biologische Proben in Suspension zur Negativfärbung oder eingebettet in Harz zur Positivfärbung.

5. Verwendung nach Anspruch 4, wobei die Verbindung die Formel [YbPW₉O₃₄]⁶⁻ aufweist.

6. Kit, umfassend separate vordosierte Behälter, umfassend die Komponenten a) bis c), wie in den Ansprüchen 1 bis 3 definiert.

7. Verfahren zur Herstellung biologischer Proben zur Analyse mittels Elektronenmikroskopie, umfassend die folgenden Schritte:
(i) Behandeln der zu analysierenden biologischen Probe mit einer gepufferten Fixierlösung mit einem pH-Wert zwischen 2 und 8;
(ii) Behandeln der Probe gemäß Punkt i) mit einer gepufferten Nachfixierlösung mit einem pH-Wert gemäß Punkt i);
(iii) Behandeln der biologischen Probe gemäß Punkt ii) mit der Lösung, die die Komponenten a) bis c), wie in den Ansprüchen 1 bis 3 definiert, umfasst.

8. Kit nach Anspruch 6 oder Verfahren nach Anspruch 7, wobei die Konzentration der Komponente b) in der Lösung zwischen 2 und 200 mM, vorzugsweise zwischen 20 und 140 mM, noch bevorzugter zwischen 40 und 80 mM liegt.

9. Verwendung einer Lösung nach einem der Ansprüche 1 bis 3 als Negativfärbelösung für biologische Proben.

10. Verwendung einer Lösung nach einem der Ansprüche 1 bis 3 als positive Färbelösung für biologische Proben.

## Revendications

1. Solution, comprenant :
a) un hétéropolyacide de formule générale H₃PM₁₂O₄₀, dans laquelle M est du tungstène ou du molybdène,
b) un sel de lanthanide de formule générale Ln(III)Aₓ*nH₂O, dans laquelle Ln est un élément choisi parmi l'ytterbium, l'europium, le terbium et le gadolinium, A est un anion halogénure, x est un nombre entier supérieur ou égal à 1, et n est un nombre entier supérieur ou égal à 0 ;
c) un solvant aqueux ou hydroalcoolique contenant jusqu'à 70 % (v/v) d'alcool.

2. Solution selon la revendication 1, dans laquelle le rapport molaire entre le composant a) et le composant b) est compris dans l'intervalle de 0,1-100, plus préférablement encore 1-50, avantageusement 1-15.

3. Solution selon la revendication 1 ou 2, dans laquelle le solvant hydroalcoolique selon le point c) comporte 20 % en v/v d'éthanol.

4. Utilisation d'un composé obtenu par une réaction entre les composants a) et b) selon l'une quelconque des revendications 1 à 3 comme agent de contraste pour des échantillons biologiques en suspension pour une coloration négative ou inclus dans une résine pour une coloration positive.

5. Utilisation selon la revendication 4, dans laquelle ledit composé a la formule [YbPW₉O₃₄]⁶⁻.

6. Kit, comprenant des récipients pré-dosés séparés comprenant les composants a) à c) tels que définis dans les revendications 1-3.

7. Procédé de préparation d'échantillons biologiques pour une analyse par microscopie électronique, comprenant les étapes suivantes :
(i) traiter l'échantillon biologique à analyser avec une solution de fixation tamponnée ayant un pH compris entre 2 et 8 ;
(ii) traiter l'échantillon selon le point i) avec une solution de post-fixation tamponnée ayant un pH comme au point i) ;
(iii) traiter l'échantillon biologique selon le point ii) avec la solution comprenant les composants a) à c) tels que définis dans les revendications 1-3.

8. Kit selon la revendication 6 ou procédé selon la revendication 7, dans lequel la concentration dudit composant b) dans la solution est comprise entre 2 et 200 mM, de préférence entre 20 et 140 mM, plus préférablement encore entre 40 et 80 mM.

9. Utilisation d'une solution selon l'une quelconque des revendications 1 à 3 comme solution de coloration négative pour des échantillons biologiques.

10. Utilisation d'une solution selon l'une quelconque des revendications 1 à 3 comme solution de coloration positive pour des échantillons biologiques.
